# FASCICULE DE BREVET EUROPEEN

(11) **EP 4 232 694 B1**
(45) Date de publication et mention de la délivrance du brevet: **27.11.2024**
(21) Numéro de dépôt: 21807193.4
(22) Date de dépôt: 20.10.2021
(51) Int. Cl.: F01D 9/04, F01D 5/28, F01D 25/24, F01D 5/14

(54) **ETAGE DE REDRESSEMENT D'UN FLUX D'AIR POUR UNE TURBOMACHINE**
LUFTSTROMRICHTSTUFE FÜR EINE TURBOMASCHINE
AIR FLOW STRAIGHTENING STAGE FOR A TURBOMACHINE

(30) Priorité: 20.10.2020 FR 2010764
(43) Date de publication de la demande: 30.08.2023
(73) Titulaire: SAFRAN AIRCRAFT ENGINES, 75015 Paris (FR)
(72) Inventeur: PERDRIGEON, Christophe, Marcel, Lucien, 77550 MOISSY-CRAMAYEL (FR); ZACCARDI, Cédric, 77550 MOISSY-CRAMAYEL (FR); RIERA, William, Henri, Joseph, 77550 MOISSY-CRAMAYEL (FR)
(74) Mandataire: Ernest Gutmann - Yves Plasseraud S.A.S.
(86) Numéro de dépôt international: PCT/FR2021/051841
(87) Numéro de publication internationale: WO 2022/084634

(56) Documents cités:
- EP-A1- 2 093 383
- EP-A1- 3 473 813
- EP-A2- 0 513 958
- US-A1- 2018 080 478

## Description

### Domaine technique de l'invention

Le présent document concerne un étage de redressement d'un flux d'air pour une turbomachine, et plus particulièrement un ensemble de redressement de flux d'air positionné en aval d'une soufflante, dans un flux secondaire.

### Etat de la technique antérieure

Une turbomachine à double flux comprend une soufflante dont le flux en sortie se divise en un flux primaire, dirigé vers les compresseurs, la chambre de combustion puis les turbines de la turbomachine, et un flux secondaire fournissant une part essentielle de la poussée.

Afin de limiter les pertes aérodynamiques et donc améliorer la poussée, il est nécessaire de redresser le flux secondaire de manière à ce qu'il s'écoule, autant que possible dans une direction axiale.

Les turbomachines comprennent, pour ce faire, des ensembles de redressement comprenant des aubes fixes communément appelées OGV (acronyme de l'anglais Outlet Guide Vane) ayant un bord d'attaque et un bord de fuite entre lesquels s'étendent une face d'intrados et une face d'extrados permettant de redresser le flux d'air.

Dans l'optique de réduire la masse d'une turbomachine certaines pièces, habituellement métalliques, sont peu à peu remplacées par des pièces en matériaux composites. C'est notamment le cas des étages de redressement qui peuvent être réalisés en matériaux composites, étant donné qu'ils sont placés dans les parties froides de la turbomachine, c'est-à-dire en amont de la chambre de combustion ou en flux secondaire, et ne sont donc pas soumis à de fortes chaleurs.

La demande de brevet WO 2014/076408, au nom de la demanderesse, divulgue, comme représenté sur la figure 1 de la présente demande, un ensemble 10 de redressement d'un flux d'air d'une turbomachine, comprenant deux viroles 12, 14 coaxiales respectivement radialement interne et externe entre lesquelles s'étendent des aubes 16 de stator fixées à une première portion d'extrémité 18 sur la virole 12 radialement interne et à une seconde portion d'extrémité 20 sur la virole 14 radialement externe. Les aubes 16 peuvent être réalisées en matériau composite et comprennent une partie 22 utile s'étendant entre les deux portions d'extrémité 18, 20 et définissant une face intrados 21 et une face extrados 23 pour redresser le flux d'air.

Si un tel ensemble permet d'alléger la turbomachine, il reste toutefois perfectible.

Premièrement, pour gagner en masse, la section des aubes pourrait être d'avantage réduite, toutefois les efforts auxquels sont soumises les aubes en fonctionnement ne permettent pas actuellement de réduire la section des aubes en matériau composite sans engendrer un risque accru de déliaison des couches de fibres constitutives des aubes. Deuxièmement, l'efficacité de l'ensemble de redressement de l'art antérieur n'est pas optimale. En effet, on a pu constater la formation de tourbillons au voisinage de l'extrados des aubes, au niveau de la fixation des aubes avec la virole radialement interne, ces tourbillons générant alors une turbulence dans le flux d'air en sortie de l'ensemble de redressement qui réduit le rendement propulsif de la turbomachine.

Aussi, en fonctionnement, l'ensemble de redressement est soumis à un effort de torsion autour de son axe qui est appliqué sur la virole interne ou la virole externe, ce qui tend à faire tourner la virole interne relativement à la virole externe. Aussi une simple réduction de la masse des aubes, et plus particulièrement de leur section, ne saurait permettre d'accroître leur résistance mécanique.

Enfin, la fixation des extrémités radiales des aubes aux viroles interne et externe est problématique puisqu'elles sont réalisées au moyen d'embase sensiblement perpendiculaire à l'aube, conduisant à la formation de zones de fragilité à la jonction des embases avec l'aube. Ce problème se pose également lorsque l'aube est en composite et lorsqu'une déliaison doit être réalisée au niveau des extrémités des aubes pour la fixation de celles-ci aux viroles interne et externe.

### Il est aussi connu le document EP 3473813 A1 .Résumé de l'invention

Le présent document concerne une turbomachine à double flux d'axe longitudinal comprenant une roue de soufflante amont et un ensemble de redressement aval d'un écoulement d'air d'une veine annulaire secondaire délimitée radialement vers l'intérieur par une virole radialement interne et radialement vers l'extérieur par une virole radialement externe, des aubes s'étendant entre les viroles radialement interne et externe et étant fixées à une première portion d'extrémité à la virole radialement interne et à une seconde portion d'extrémité à la virole radialement externe, les aubes comprenant une partie aérodynamiquement utile s'étendant entre lesdites première et seconde portions d'extrémité et définissant une face intrados et une face extrados, caractérisé en ce que pour chaque aube, dans un plan perpendiculaire à l'axe longitudinal, chaque partie utile est incurvée en direction circonférentielle dans le même sens avec une forme en C.

La formation d'une partie utile incurvée comme dans la proposition technique du présent document, permet de réduire la création de tourbillons en pied d'aube, participant ainsi à l'amélioration du rendement de la turbomachine. Par ailleurs, la liaison de la partie utile avec la première portion d'extrémité, c'est-à-dire avec la portion d'extrémité radialement interne, et avec la seconde portion d'extrémité, c'est-à-dire avec la portion d'extrémité radialement externe, peut être réalisée sans former un angle de 90° entre la partie utile et les première et seconde portion d'extrémité.

Selon une autre caractéristique, la première portion d'extrémité et la seconde portion d'extrémité ne s'étendent pas à l'intérieur de la veine annulaire secondaire de manière à éviter que ces portions d'extrémité qui réalisent la fixation des aubes de redressement impactent l'écoulement d'air dans la veine annulaire secondaire. Pour cela, la turbomachine peut comprendre un élément annulaire radialement interne de paroi et un élément annulaire radialement externe de paroi. L'élément annulaire radialement interne de paroi et l'élément annulaire radialement externe de paroi peuvent être rapportées et définissent ensemble la veine annulaire secondaire. Plus précisément, la veine annulaire secondaire est délimitée par la face radialement externe de l'élément de paroi annulaire radialement interne et par la face radialement interne de l'élément de paroi annulaire radialement externe.

La première portion d'extrémité est ainsi agencée entre la virole annulaire radialement interne et l'élément annulaire radialement interne de paroi. La seconde portion d'extrémité est ainsi agencée entre la virole annulaire radialement externe et l'élément annulaire radialement externe de paroi.

L'élément annulaire radialement interne de paroi et l'élément annulaire radialement externe de paroi peuvent être sectorisé. Ils peuvent comprendre plusieurs plateformes aérodynamiques agencées circonférentiellement bout à bout et par exemple solidarisés aux viroles annulaires interne et externe.

Chaque partie utile aérodynamiquement est telle qu'une face d'intrados ou une face extrados soit incurvée concave et que respectivement la face d'extrados ou la face d'intrados soit incurvée convexe, en direction radiale.

En ce qui concerne l'aérodynamique, les aubes offrent une surface plus importante (par rapport à une aube radiale) et avec un angle d'interface avec la virole interne et la virole externe qui est proche de zéro, les pertes sont donc moins importantes. Le nombre total d'aubes nécessaire pour redresser le flux est aussi moins important (car la surface aérodynamique globale par aube est plus grande). Cela peut conduire à un plus faible nombre d'aubes à intégrer avec le carter intermédiaire, à une baisse des pertes aérodynamiques et à une baisse de la masse totale.

Classiquement, une portion d'extrémité comprend une déliaison, c'est-à-dire deux portions s'étendant dans des sens circonférentiels opposés. Selon le présent document, la première portion d'extrémité et la seconde portion d'extrémité peuvent être dépourvues de déliaison et s'étendre circonférentiellement dans le prolongement de l'extrémité de la partie utile à laquelle elles sont reliées. Dit autrement, chaque extrémité d'une partie utile s'étend dans un même premier sens circonférentiel de l'aube, les portions d'extrémités prolongent la partie utile dans ce même premier sens circonférentiel.

Les portions d'extrémités peuvent être appliquées sur la virole interne ou externe.

L'angle entre l'extrémité radialement interne ou externe de la partie utile et la virole interne ou externe peut être bien inférieur à 90°, et par exemple compris entre 20 et 30°, ce qui permet de réduire encore davantage les tourbillons de la technique antérieure.

Lorsque les aubes sont en composite, tel qu'un composite à matrice céramique comportant des fibres céramique, l'invention prend une importance particulière puisque l'on évite la formation d'angle important dans les fibres qui pourrait induire une rupture de celles-ci.

La première portion d'extrémité peut comprendre une platine de fixation à la virole interne. La seconde portion d'extrémité peut comprendre une platine de fixation à la virole externe. L'une et/ou l'autre des platines peut comprendre des bords radiaux amont et/ou aval. Chaque platine peut être traversée par des vis de fixation à la virole interne ou externe.

La partie utile peut comprendre :
- une première portion présentant un premier rayon de courbure moyen ;
- une seconde portion présentant un second rayon de courbure moyen ; et
- une troisième portion présentant un troisième rayon de courbure moyen ;
le premier rayon de courbure moyen et le troisième rayon de courbure moyen étant supérieures au second rayon de courbure moyen.

Il est possible d'avoir une seconde portion de la partie utile de l'aube qui est positionnée radialement de manière sensiblement centrale entre les virole interne et externe.

Le premier rayon moyen et le second rayon moyen peuvent être identiques.

La première portion d'extrémité et la seconde portion d'extrémité peuvent être décalées angulairement l'une par rapport à l'autre.

### Brève description des figures

[Fig. 1] est une vue schématique de face d'un ensemble de redressement de l'art antérieur ;
[Fig. 2] est une demi-coupe simplifiée d'une turbomachine comprenant un ensemble de redressement selon l'invention ;
[Fig. 3] est une vue schématique d'un redresseur selon le présent document ;
[Fig. 4] est une illustration schématique d'une aube selon la technique antérieure ;
[Fig. 5] est une illustration schématique d'une aube selon le présent document ;
[Fig. 6] illustre en partie A la liaison de l'aube à une virole interne et en partie B la liaison de l'aube à une virole externe.

### Description détaillée de l'invention

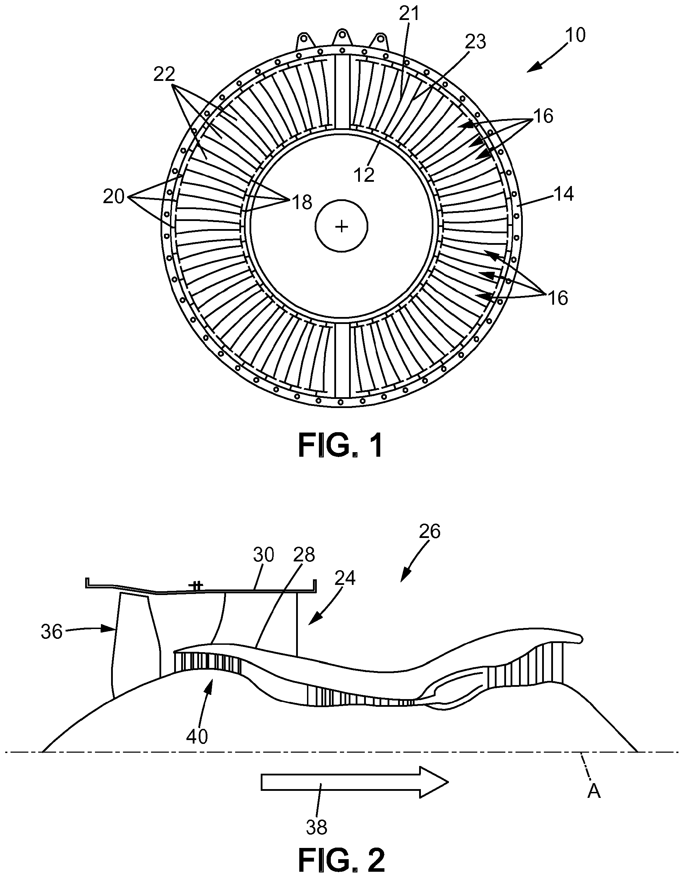

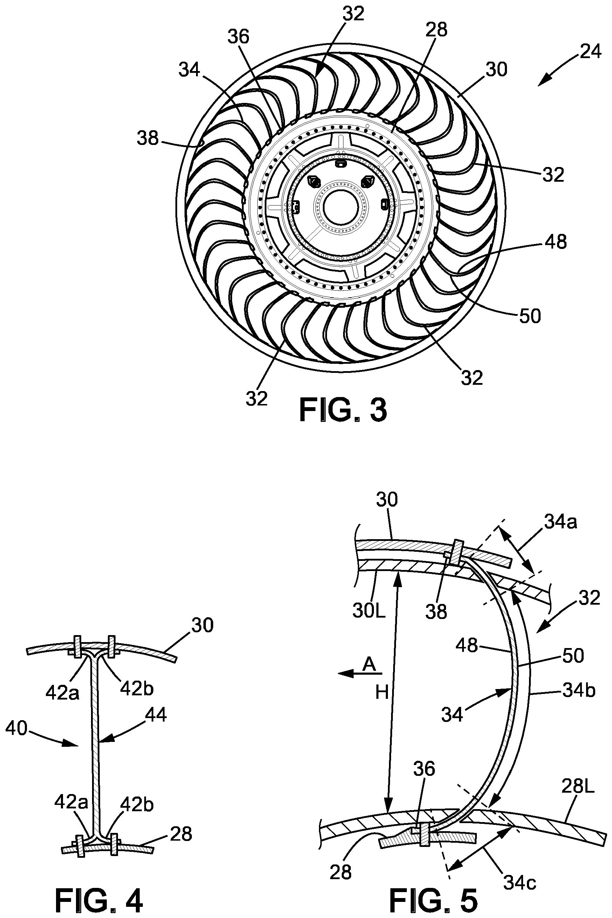

On a représenté, de manière schématique, en figure 2 une demi-coupe d'une turbomachine 26 comprenant un ensemble 24 de redressement tel qu'illustré en figure 3 qui est destiné à permettre un redressement d'un écoulement d'air dans une veine d'air secondaire d'une turbomachine 26 vue de face.

Cet ensemble de redressement 24 comprend deux viroles 28, 30 coaxiales radialement interne et externe, respectivement, entre lesquelles s'étendent des aubes 32. Avantageusement, les aubes 32 sont réalisées en matériau composite de sorte à réduire la masse de l'ensemble 24 de redressement, tout en offrant une tenue mécanique équivalente ou supérieure.

Comme on peut le voir sur la figure 3, dans un plan perpendiculaire à l'axe longitudinal, les aubes 32 sont incurvées en direction circonférentielle avec une forme en C.

Plus précisément comme illustré sur la figure 5, chaque aube 32 comprend une partie aérodynamiquement utile 34 incurvée circonférentiellement avec une forme en C, cette partie utile est reliée à son extrémité radialement interne à une première portion 36 d'extrémité et à son extrémité radialement externe à une seconde portion 38 d'extrémité. Cette forme en C permet d'augmenter la surface aérodynamique de chaque aube 32 permettant d'envisager de réduire le nombre total d'aubes 32 pouvant ainsi conduire à une réduction de la masse du redresseur 24. Par ailleurs, l'utilisation d'une partie utile incurvée permet de réduire fortement la formation de tourbillons au voisinage de l'extrados des aubes, au niveau de la fixation des aubes avec la virole radialement interne 28. Une partie utile ou partie utile aérodynamiquement de l'aube est une partie qui assure une fonction aérodynamique en relation avec l'écoulement d'air et dans le cas d'espèce qui assure un redressement du flux d'air provenant de la soufflante agencée en amont. A contrario, la première portion d'extrémité et la seconde portion d'extrémité n'assure aucune fonction aérodynamique sur l'écoulement d'air. Elles ne participent pas au redressement du flux d'air.La forme en C est telle que la face d'intrados est incurvée concave et que la face d'extrados est incurvée convexe. Notons que dans une autre configuration, l'inverse serait également réalisable. Toutefois, la première configuration est plus avantageuse sur la réduction des tourbillons au niveau des extrémités radialement interne et externe dans certaines conditions. A remarquer que la forme en C fait varier la répartition de débit sur la hauteur, donc selon les configurations, il peut éventuellement y avoir un intérêt à disposer de l'un ou l'autre pour limiter la charge sur les profils d'aube à mi-hauteur ou bien pour l'augmenter et donc limiter la charge en pied et tête d'aube.

Comme illustré en figure 4, une aube radiale 40 classique en composite à matrice et fibres céramiques, comprend une déliaison au niveau des portions d'extrémité, c'est-à-dire deux portions 42a, 42b s'étendant dans des sens circonférentiels opposés afin de réaliser la fixation de la partie aérodynamiquement utile 44 de l'aube 42 à la virole interne 28 et la virole externe 30.

Selon une réalisation d'une aube 32 telle qu'illustrée en figure 5, la première portion d'extrémité 36 et la seconde portion d'extrémité 38 reliées à la partie aérodynamiquement utile 34 de l'aube 32 en matériau composite peuvent être dépourvues de déliaison et s'étendre circonférentiellement dans le même sens (flèche A) circonférentiel que l'extrémité de la partie utile 34 à laquelle elles sont reliées. Ainsi, chaque extrémité d'une partie utile 34 s'étend dans un même premier sens circonférentiel (flèche A), les portions d'extrémités 36, 38 prolongent la partie utile 34 dans ce même premier sens circonférentiel (flèche A).

Dans une réalisation particulière, la partie utile 34 peut comprendre :
- une première portion 34a présentant un premier rayon de courbure moyen ;
- une seconde portion 34b présentant un second rayon de courbure moyen ; et
- une troisième portion 34c présentant un troisième rayon de courbure moyen ;
le premier rayon de courbure moyen et le troisième rayon de courbure moyen étant supérieurs au second rayon de courbure moyen. Il serait possible d'avoir une seconde portion 34b de la partie utile de l'aube qui est positionnée radialement de manière sensiblement centrale entre les viroles interne 28 et externe 30. Dans le cas illustré sur la figure 5, le premier rayon de courbure moyen et le second rayon de courbure moyen sont identiques.

La première portion d'extrémité 36 et la seconde portion d'extrémité 38 peuvent être décalées angulairement l'une par rapport à l'autre comme cela est visible sur la figure 3 et la figure 5.

La première portion d'extrémité 36 et la seconde portion d'extrémité 38 peuvent être sensiblement planes et être chacune appliquées sur les viroles interne et externe respectivement.

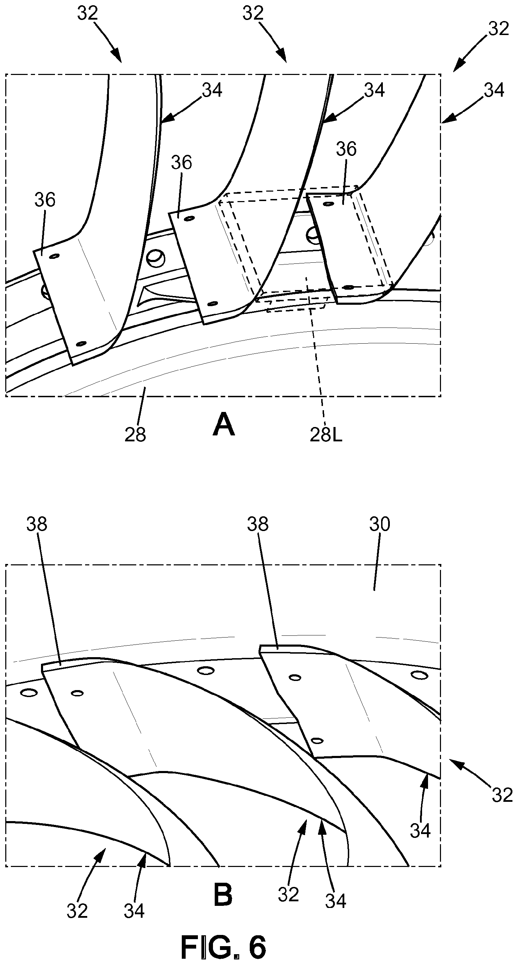

La première portion d'extrémité 36 et la seconde portion d'extrémité 38 présentent la forme d'une platine de fixation à la virole interne 28 et à la virole externe 30 comme cela est illustré sur les figures 6A et 6B. Ces platines peuvent être sensiblement planes. Dans cette configuration, la liaison d'une platine avec une extrémité radialement interne ou externe de la partie utile s'effectue avec un angle qui est compris entre 20 et 30°.

Comme on l'observe en figure 5, chaque platine comprend des rebords radiaux 42 amont et aval permettant le positionnement axial de l'aube 32 sur les viroles interne 28 et externe 30. Chaque platine est traversée par des vis de fixation à la virole interne 28 ou externe 30. Dans les différentes réalisations représentées, on observe que la première portion d'extrémité et la seconde portion d'extrémité ne s'étendent pas à l'intérieur de la veine annulaire secondaire de manière à éviter que ces portions d'extrémité qui réalisent la fixation des aubes de redressement impactent l'écoulement d'air dans la veine annulaire secondaire.

En effet, comme illustré aux figures 5 et 6A, l'ensemble de redressement peut comprendre un élément annulaire radialement interne de paroi 28L et un élément annulaire radialement externe 30L de paroi. L'élément annulaire radialement interne 28L de paroi et l'élément annulaire radialement externe 30L de paroi peuvent être rapportées et définissent ensemble la veine annulaire secondaire dans laquelle s'écoule l'air. Plus précisément, la veine annulaire secondaire de hauteur H est délimitée par la face radialement externe de l'élément de paroi annulaire radialement interne 28L et par la face radialement interne de l'élément de paroi annulaire radialement externe 30L.

La première portion d'extrémité 36 est ainsi agencée entre la virole annulaire radialement interne 28 et l'élément annulaire radialement interne 28L de paroi. La seconde portion d'extrémité 38 est ainsi agencée entre la virole annulaire radialement externe 30 et l'élément annulaire radialement externe 30L de paroi.

L'élément annulaire radialement interne 28L de paroi et l'élément annulaire radialement externe 30L de paroi peuvent être sectorisés. Ils peuvent comprendre plusieurs plateformes aérodynamiques agencées circonférentiellement bout à bout et par exemple solidarisés aux viroles annulaires interne 28 et externe 30.

Chaque plateforme annulaire peut comprendre une patte latéral amont et une patte latéral aval pour la fixation sur la virole annulaire interne 28 ou externe 30.

## Revendications

1. Turbomachine (26) à double flux d'axe longitudinal comprenant une roue (36) de soufflante amont et un ensemble (24) de redressement aval d'un écoulement d'air d'une veine annulaire secondaire délimitée radialement vers l'intérieur par une virole (28) radialement interne et radialement vers l'extérieur par une virole (30) radialement externe, des aubes (32) s'étendant entre les viroles (28, 30) radialement interne et externe et étant fixées à une première portion d'extrémité (36) à la virole (28) radialement interne et à une seconde portion d'extrémité (38) à la virole (30) radialement externe, les aubes (32) comprenant une partie (34) aérodynamiquement utile s'étendant entre lesdites première et seconde portions d'extrémité (42, 44) et définissant une face (48) intrados et une face (50) extrados, **caractérisé en ce que** pour chaque aube (32), dans un plan perpendiculaire à l'axe longitudinal, chaque partie aérodynamiquement utile (34) est incurvée en direction circonférentielle dans le même sens avec une forme en C.

2. Turbomachine selon la revendication 1, dans laquelle la forme en C est telle que la face d'intrados (48) est incurvée concave et que la face d'extrados (50) est incurvée convexe.

3. Turbomachine selon la revendication 1 ou 2, dans laquelle la première portion d'extrémité (36) et la seconde portion d'extrémité (38) sont dépourvues de déliaison et s'étendent circonférentiellement dans le même sens que l'extrémité de la partie aérodynamiquement utile (34) à laquelle elles sont reliées.

4. Turbomachine selon l'une des revendications 1 à 3, dans laquelle la première portion d'extrémité (36) comprend une platine de fixation à la virole interne (28).

5. Turbomachine selon l'une des revendications 1 à 4, dans laquelle la seconde portion d'extrémité (38) comprend une platine de fixation à la virole externe (30).

6. Turbomachine selon la revendication 4 ou 5, dans laquelle la platine est traversée par des vis de fixation à une virole.

7. Turbomachine selon l'une des revendications 1 à 6, dans laquelle la partie aérodynamiquement utile comprend :
- une première portion (34a) présentant un premier rayon de courbure moyen ;
- une seconde portion (34b) présentant un second rayon de courbure moyen ; et
- une troisième portion (34c) présentant un troisième rayon de courbure moyen ;
le premier rayon de courbure moyen et le troisième rayon de courbure moyen étant supérieures au second rayon de courbure moyen.

8. Turbomachine selon la revendication 7, dans laquelle le premier rayon de courbure moyen et le second rayon de courbure moyen sont identiques.

9. Turbomachine selon l'une des revendications 1 à 8, dans laquelle la première portion d'extrémité (36) et la seconde portion d'extrémité (38) sont décalées angulairement l'une par rapport à l'autre.

## Patentansprüche

1. Mantelstromturbotriebwerk (26) mit einer Längsachse, umfassend ein stromaufwärts gelegenes Gebläserad (36) und eine stromabwärts gelegene Gleichrichtungsanordnung (24) für eine Luftströmung eines sekundären ringförmigen Strömungskanals, der radial nach innen durch einen radial inneren Mantelring (28) und radial nach außen durch einen radial äußeren Mantelring (30) begrenzt ist, Schaufeln (32), die sich zwischen dem radial inneren und dem radial äußeren Mantelring (28, 30) erstrecken und mit einem ersten Endabschnitt (36) an den radial inneren Mantelring (28) und mit einem zweiten Endabschnitt (38) an den radial äußeren Mantelring (30) befestigt sind, wobei die Schaufeln (32) ein aerodynamisch zweckdienliches Teil (34) umfassen, das sich zwischen dem ersten und dem zweiten Endabschnitt (42, 44) erstreckt und eine Druckseite (48) und eine Saugseite (50) definiert,
**dadurch gekennzeichnet, dass** für jede Schaufel (32) in einer Ebene senkrecht zur Längsachse jedes aerodynamisch zweckdienliche Teil (34) in Umfangsrichtung in der gleichen Richtung C-förmig gekrümmt verläuft.

2. Turbotriebwerk nach Anspruch 1,
wobei die C-Form derart ausgebildet ist, dass die Druckseite (48) konkav gekrümmt verläuft und die Saugseite (50) konvex gekrümmt verläuft.

3. Turbotriebwerk nach Anspruch 1 oder 2,
wobei der erste Endabschnitt (36) und der zweite Endabschnitt (38) zusammenhängend ausgebildet sind und sich in Umfangsrichtung in der gleichen Richtung wie das Ende des aerodynamisch zweckdienlichen Teils (34), mit dem sie verbunden sind, erstrecken.

4. Turbotriebwerk nach einem der Ansprüche 1 bis 3,
wobei der erste Endabschnitt (36) eine Platine zur Befestigung an den inneren Mantelring (28) umfasst.

5. Turbotriebwerk nach einem der Ansprüche 1 bis 4,
wobei der zweite Endabschnitt (38) eine Platine zur Befestigung an den äußeren Mantelring (30) umfasst.

6. Turbotriebwerk nach Anspruch 4 oder 5,
wobei die Platine von Schrauben zur Befestigung an einen Mantelring durchsetzt ist.

7. Turbotriebwerk nach einem der Ansprüche 1 bis 6,
wobei das aerodynamisch zweckdienliche Teil umfasst:
- einen ersten Abschnitt (34a) mit einem ersten mittleren Krümmungsradius;
- einen zweiten Abschnitt (34b) mit einem zweiten mittleren Krümmungsradius; und
- einen dritten Abschnitt (34c) mit einem dritten mittleren Krümmungsradius;
wobei der erste mittlere Krümmungsradius und der dritte mittlere Krümmungsradius größer als der zweite mittlere Krümmungsradius sind.

8. Turbotriebwerk nach Anspruch 7,
wobei der erste mittlere Krümmungsradius und der zweite mittlere Krümmungsradius gleich sind.

9. Turbotriebwerk nach einem der Ansprüche 1 bis 8,
wobei der erste Endabschnitt (36) und der zweite Endabschnitt (38) winkelmäßig gegeneinander versetzt sind.

## Claims

1. Bypass turbine engine (26) with a longitudinal axis comprising an upstream fan wheel (36) and a downstream assembly (24) for straightening an airflow from a secondary annular flow path delimited radially inwards by a radially inner shroud (28) and radially outward by a radially outer shroud (30), vanes (32) extending between the radially inner and outer shrouds (28, 30) and being fastened at a first end portion (36) to the radially inner shroud (28) and at a second end portion (38) to the radially outer shroud (30), the vanes (32) comprising an aerodynamically useful portion (34) extending between said first and second end portions (42, 44) and defining an intrados face (48) and an extrados face (50), **characterised in that** for each vane (32), in a plane perpendicular to the longitudinal axis, each aerodynamically useful portion (34) is curved in the same circumferential direction with a C-like shape.

2. Turbine engine according to claim 1, wherein the C-like shape is such that the intrados face (48) is concavely curved and the extrados face (50) is convexly curved.

3. Turbine engine according to claim 1 or 2, wherein the first end portion (36) and the second end portion (38) are devoid of any disjoint and extend circumferentially in the same direction as the end of the aerodynamically useful portion (34) to which they are connected.

4. Turbine engine according to one of claims 1 to 3, wherein the first end portion (36) comprises a plate for fastening to the inner shroud (28).

5. Turbine engine according to one of claims 1 to 4, wherein the second end portion (38) comprises a plate for fastening to the outer shroud (30).

6. Turbine engine according to claim 4 or 5, wherein the plate is crossed by screws for fastening to a shroud.

7. Turbine engine according to one of claims 1 to 6, wherein the aerodynamically useful portion comprises:
- a first portion (34a) having a first mean radius of curvature;
- a second portion (34b) having a second mean radius of curvature; and
- a third portion (34c) having a third mean radius of curvature;
the first mean radius of curvature and the third mean radius of curvature being larger than the second mean radius of curvature.

8. Turbine engine according to claim 7, wherein the first mean radius of curvature and the second mean radius of curvature are identical.

9. Turbine engine according to one of claims 1 to 8, wherein the first end portion (36) and the second end portion (38) are angularly offset with respect to each other.
